# FASCICULE DE BREVET EUROPEEN

(11) **EP 3 926 416 B1**
(45) Date de publication et mention de la délivrance du brevet: **10.12.2025**
(21) Numéro de dépôt: 20181027.2
(22) Date de dépôt: 19.06.2020
(51) Int. Cl.: G04D 7/00, G01B 11/04, G01B 11/10, G01B 11/24

(54) **DISPOSITIF DE MESURE D'UN COMPOSANT HORLOGER**
VORRICHTUNG ZUR MESSUNG EINER UHRWERKSKOMPONENTE
DEVICE FOR MEASURING A TIMEPIECE COMPONENT

(43) Date de publication de la demande: 22.12.2021
(73) Titulaire: ROLEX SA, 1211 Genève 26 (CH)
(72) Inventeur: MOUGIN, Christian, 2504 Bienne (CH); PERRINJAQUET, Olivier, 2065 Savagnier (CH); AMSTUTZ, Mathieu, 2416 Les Brenets (CH); LUTHI, Rowan, 2502 Bienne (CH); SALVADÉ, Yves, 2610 Saint Imier (CH)
(74) Mandataire: Moinas & Savoye SARL

(56) Documents cités:
- EP-A1- 1 127 244
- EP-A2- 3 112 800
- DE-A1- 102004 047 847
- GB-A- 2 145 852

## Description

La présente invention concerne un dispositif de mesure d'un composant horloger.

Elle porte aussi sur un dispositif de fabrication d'un composant horloger. Elle porte aussi sur un procédé de mesure d'un composant horloger, et sur un procédé de fabrication d'un composant horloger.

La fabrication d'un composant horloger est souvent réalisée par usinage à l'aide d'une machine-outil permettant de fabriquer des formes complexes avec une grande précision. Il est toujours souhaitable d'améliorer encore la précision d'un tel procédé de fabrication. Pour cela, il est connu de procéder à des vérifications régulières des composants fabriqués, par leur mesure, pour vérifier la conformité des composants fabriqués et pour optimiser les réglages de la machine-outil utilisée. Les mesures de tels composants induisent toutefois une complexité supplémentaire du procédé de fabrication, par exemple en exigeant le positionnement des composants sur une plateforme spécifique de mesure ou une adaptation de l'unité d'usinage pour permettre une mesure avec le composant encore maintenu, et/ou en nécessitant le nettoyage des composants à leur sortie de la machine-outil, d'où ils sortent recouverts de l'huile de coupe utilisée par la machine-outil. Ces mesures conduisent ainsi généralement à un ralentissement du procédé de fabrication et à une lourdeur de mise en œuvre.

Les solutions existantes pour améliorer la précision de la fabrication des composants horlogers lors de leur usinage par une machine-outil ne sont donc pas satisfaisantes. Le document EP 3 112 800 A2 décrit un procédé de mesure d'au moins une dimension d'un objet présentant un premier axe, le procédé comprenant l'utilisation d'un système optique comprenant un capteur optique.

Ainsi, la présente invention a pour objet de proposer une solution permettant d'optimiser la précision lors de l'usinage des composants horlogers par une mesure rapide et facile des composants.

Plus précisément, l'invention a pour objet de proposer une solution permettant d'optimiser l'usinage d'un composant horloger sans ralentir, ni alourdir, le procédé de fabrication du composant horloger.

L'invention a aussi pour objet une solution de mesure rapide, précise et fiable d'au moins une dimension d'un composant horloger.

A cet effet, l'invention repose sur un dispositif de mesure d'un composant horloger selon la revendication 1 annexée.

L'invention porte aussi sur un dispositif de fabrication d'un composant horloger, caractérisé en ce qu'il comprend une unité d'usinage et un dispositif de mesure tel que décrit ci-dessus.

L'invention porte aussi sur un procédé de mesure d'un composant horloger, selon la revendication 17 annexée.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement un dispositif de mesure d'un composant horloger selon un mode de réalisation de l'invention.
Les figures 2a et 2b représentent schématiquement deux configurations de déplacement d'un composant horloger dans un canal de mesure d'un dispositif de mesure d'un composant horloger selon le mode de réalisation de l'invention.
La figure 3 représente schématiquement une zone de mesure d'un dispositif de mesure d'un composant horloger selon le mode de réalisation de l'invention.
La figure 4 représente schématiquement une zone de mesure d'un dispositif de mesure d'un composant horloger selon une variante du mode de réalisation de l'invention.
La figure 5 représente une vue schématique du dispositif de mesure relié à une machine-outil, une unité de tri et une unité de pilotage selon un mode de réalisation de l'invention.

L'invention repose sur un dispositif de mesure d'un composant horloger qui permet une mesure à partir d'images prises par des systèmes optiques pendant le déplacement du composant horloger, et sans besoin de nettoyage de ce composant horloger à sa sortie d'une machine-outil d'usinage. Avantageusement, ce déplacement du composant horloger est un mouvement libre, en immersion dans un liquide. Il en résulte que l'invention présente le premier avantage d'une vitesse importante de mesure puisque les mesures effectuées sont réalisées sur des composants en mouvement. Elle est de plus très simple et facile à implémenter puisque les composants n'ont pas à être positionnés sur une plateforme spécifique et/ou selon une orientation prédéfinie d'une part, et puisqu'ils n'ont pas besoin d'être nettoyés d'autre part.

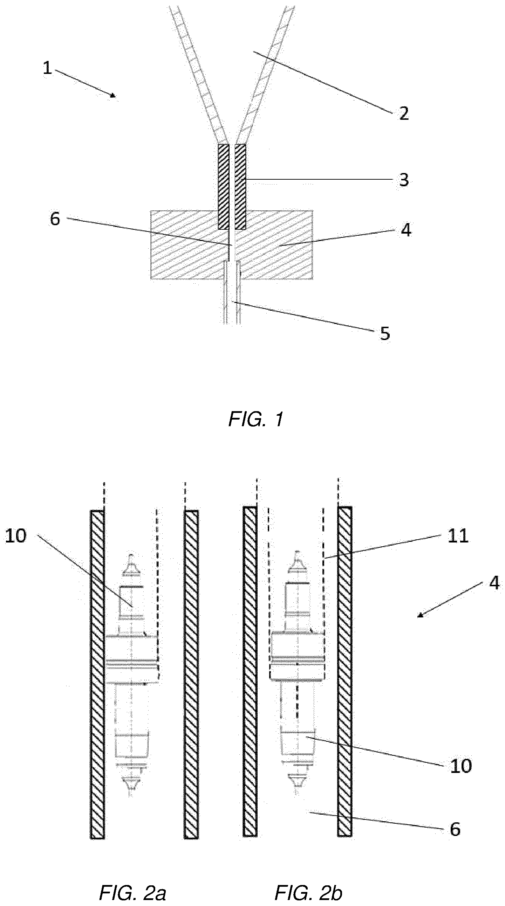

La figure 1 représente un dispositif de mesure 1 pour composants horlogers selon un mode de réalisation. Ce dispositif comprend une partie d'introduction 2 des composants horlogers, qui est susceptible d'être positionnée directement en aval d'une machine-outil 30, c'est-à-dire de sorte à recevoir l'introduction des composants horlogers dès leur sortie d'une phase d'usinage par une machine-outil 30. Cette partie d'introduction 2 présente une forme d'entonnoir. Elle peut présenter toute forme permettant le guidage et/ou l'orientation d'un composant horloger. Cette fonction de guidage peut être renforcée par tout actionnement de la partie d'introduction 2, qui peut se présenter comme un bol vibrant, un alimentateur centrifuge, etc. De préférence, au moins une portion de cette partie d'introduction 2 est remplie avec un fluide, par exemple, pour permettre l'élimination d'éventuelles bulles d'air qui seraient présentes en surface des composants horlogers lors de leur introduction dans le fluide.

Le dispositif de mesure 1 comprend ensuite une première structure de transport 3, qui permet de transporter des composants horlogers depuis la partie d'introduction 2 jusqu'à un canal de mesure 6 d'une cellule de mesure 4, qui sera décrite par la suite. La liaison entre la partie d'introduction 2 et la première structure de transport 3 est conçue de manière à éviter le blocage des composants horlogers, par exemple par l'intermédiaire d'une géométrie adaptée et d'un état de surface maitrisé. Cette liaison permet ainsi le guidage des composants horlogers jusqu'à la cellule de mesure 4, de préférence selon une orientation choisie imposée par la partie d'introduction 2. Avantageusement, la première structure de transport 3 permet donc de maintenir l'orientation préférentielle prédéterminée des composants horlogers. La première structure de transport 3 est de préférence de même remplie avec un fluide. Ainsi, les composants horlogers peuvent atteindre la cellule de mesure 4 selon une position sensiblement similaire à celle qu'ils ont dans la première structure de transport 3 de manière sensiblement répétable d'un composant à l'autre. Pour cela, la première structure de transport 3 se présente par exemple sous la forme d'une conduite, remplie du fluide susmentionné, de section circulaire ou ovale. De plus, la surface interne d'une telle conduite est telle qu'elle minimise toute perturbation d'écoulement du fluide et évite le blocage d'un composant horloger.

Le dispositif de mesure 1 comprend enfin optionnellement une deuxième structure de transport 5, adaptée pour transporter un composant horloger depuis la cellule de mesure 4 vers un collecteur non représenté. Ensuite, les composants horlogers peuvent être conduits vers une unité de tri 40 dans laquelle les composants horlogers considérés non conformes sont susceptibles d'être mis à l'écart. En variante ou complément, les composants horlogers peuvent aussi être orientés vers une unité de nettoyage, non représentée. Cette deuxième structure de transport 5 est de même avantageusement remplie d'un fluide.

Selon le mode de réalisation, la jonction entre la première structure de transport 3, et/ou l'optionnelle deuxième structure de transport 5, avec un canal de mesure 6 de la cellule de mesure 4 présente une forme tronconique, qui permet de minimiser le risque de blocage d'un composant horloger. De préférence, le diamètre du canal de mesure 6 de la cellule de mesure 4 est inférieur ou égal au diamètre de la conduite de la structure de transport 3.

Comme mentionné précédemment, les première et deuxième structures de transport 3, 5 et le canal de mesure 6 de la cellule de mesure 4 sont remplis avec un fluide. Ce fluide est de préférence un liquide, et de préférence un liquide visqueux. En complément, un dispositif est prévu pour garder le volume global de fluide du dispositif de mesure 1 sensiblement constant, par exemple par l'intermédiaire de pompes ou de tout autre système approprié. Le cas échéant, des dégazeurs peuvent être prévus de manière à éviter toute présence de bulle d'air au niveau de la cellule de mesure 4, qui serait susceptible de perturber les mesures. Le fluide est de plus de préférence préalablement filtré pour minimiser la présence de particules.

Le fluide remplit une fonction importante dans le déplacement des composants horlogers, et sa viscosité est contrôlée. Notamment, la température du fluide est alors de préférence contrôlée, puisqu'elle influence la viscosité du fluide. Une telle température est par exemple maintenue dans une plage entre 20 et 35°C, voire de préférence entre 21 et 25°C. Avantageusement, le fluide circule en circuit fermé ou ouvert dans le dispositif de mesure 1, de préférence en régime laminaire à une vitesse prédéterminée la plus constante possible pour que son mouvement ne soit pas perceptible par les systèmes optiques de la cellule de mesure. Une telle vitesse permet ainsi de participer au transport des composants horlogers. Elle permet de ne pas induire des discontinuités dans la vitesse de déplacement des composants horlogers dans la cellule de mesure 4. Dans une variante, le fluide est immobile dans le dispositif de mesure 1 et les composants horlogers à mesurer se déplacent par exemple sous l'effet de la gravité.

La viscosité cinématique du fluide permet ainsi de maîtriser la vitesse de passage des composants horlogers dans la cellule de mesure. Cette vitesse est choisie notamment pour permettre la bonne saisie d'une ou plusieurs images d'un composant horloger par un système optique. Avantageusement, la cellule de mesure 4 est dimensionnée et le fluide choisi afin qu'un composant horloger à mesurer traverse la cellule de mesure 4 à une vitesse comprise entre 70 et 180 mm/s, notamment au niveau des systèmes optiques de la cellule de mesure 4. Cette vitesse de déplacement présente une composante non nulle selon la direction longitudinale du canal de mesure de la cellule de mesure. Une telle vitesse sera ainsi compatible avec la fréquence de travail des systèmes optiques. Pour atteindre au mieux les propriétés décrites ci-dessus, le liquide (fluide) présente avantageusement une viscosité cinématique comprise entre 2 mm²/s et 50 mm²/s (à 40°C selon la norme DIN 51562-1).

D'autre part, le fluide utilisé présente une viscosité cinématique prédéterminée, similaire à la viscosité cinématique d'une huile d'usinage utilisée par un dispositif d'usinage (machine-outil 30) d'un composant horloger, ce qui permet de s'affranchir de l'environnement habituellement défavorable de la zone d'usinage d'une machine-outil, qui dégrade la précision et la répétabilité des mesures quand il reste des résidus d'usinage et/ou de traces d'huile sur des composants horlogers, tout en supprimant la nécessité de nettoyer les composants horlogers avant d'effectuer leur mesure.

Enfin, le fluide est choisi avec un indice de réfraction prédéterminé, une transparence au moins partielle, afin d'être optimal vis-à-vis des systèmes optiques de la cellule de mesure 4, qui seront détaillés par la suite. Un tel fluide est par exemple une huile minérale, une huile végétale, une émulsion, une microémulsion, avec la condition que les constituants de l'émulsion aient des indices de réfraction proches, un fluide synthétique, etc. Idéalement, le fluide est identique à l'huile de coupe utilisée sur la machine-outil 30 dont est issu le composant. Des exemples d'huile connues sous les dénomination commerciales Blasomill^{®} (notamment Blasomill^{®} 22), Swisscut^{®} otho, Swisscut^{®} Frisco, Swisscut^{®} Decomed sont considérées comme performantes.

La cellule de mesure 4 comprend donc un canal de mesure 6 qui guide un composant horloger dans son déplacement. Ce canal de mesure 6 est rempli du fluide susmentionné. Il présente de préférence une architecture qui lui permet d'optimiser le déplacement d'un composant horloger et/ou dudit fluide. Par exemple, il peut avoir une section circulaire ou ellipsoïdale, ou toute autre forme de préférence sans arête vive. De plus, sa paroi présente de préférence une rugosité permettant de ne pas interférer avec les appareils de mesure optique et de prévenir le blocage des pièces dans le canal de mesure. Plus globalement, les dimensions, forme et état de surface du canal de mesure 6 permettent finalement de favoriser le déplacement continu d'un composant horloger, et naturellement d'éviter son blocage. De manière générale, nous appelons diamètre du canal de mesure le diamètre du canal de mesure lorsque sa section est circulaire, ou le diamètre du cercle minimal dans lequel sa section est inscrite si cette section du canal de mesure n'est pas circulaire. De plus, nous appelons diamètre maximal du composant horloger le diamètre d'un cylindre minimal dans lequel le composant horloger à mesurer serait inscrit. De préférence, le diamètre du canal de mesure est supérieur au diamètre maximal du composant horloger, de préférence supérieur de 5 % au diamètre maximal du composant horloger, pour éviter tout blocage. De plus, le diamètre du canal de mesure est aussi de préférence inférieur à 1.8 fois le diamètre maximal du composant horloger, pour garantir la détection du composant horloger par un capteur de passage, qui sera détaillé par la suite.

Les figures 2a et 2b illustrent à titre d'exemple deux configurations de déplacement d'un axe de balancier 10 au sein d'un même canal de mesure 6 d'une cellule de mesure 4. Un tel axe de balancier 10 présente sensiblement une symétrie de révolution autour d'un axe central. Il présente une section maximale dont le diamètre correspond au diamètre maximal de l'axe de balancier, c'est-à-dire le diamètre minimal du cylindre 11 dans lequel l'axe de balancier est inscrit, que nous appelons diamètre maximal de l'axe de balancier 10 selon la définition explicitée précédemment. Un axe de balancier 10 présente en général un diamètre maximal compris entre 0.3 et 1.2 mm et une longueur comprise entre 6 et 8 mm. A titre d'exemple, pour un composant horloger de révolution de diamètre maximal 1.2 mm, un diamètre du canal de mesure 6 compris entre 1.26 mm et 2.16 mm, typiquement un diamètre du canal de mesure 6 de 1.4 mm, permet de garantir la détection du composant horloger, même lorsqu'il est plaqué sur un côté du canal, comme représenté sur la figure 2a, alors que la figure 2b représente la situation idéale dans laquelle l'axe de balancier 10 se déplace au centre du canal de mesure 6, selon une orientation de sa longueur alignée avec l'axe longitudinal du canal de mesure 6.

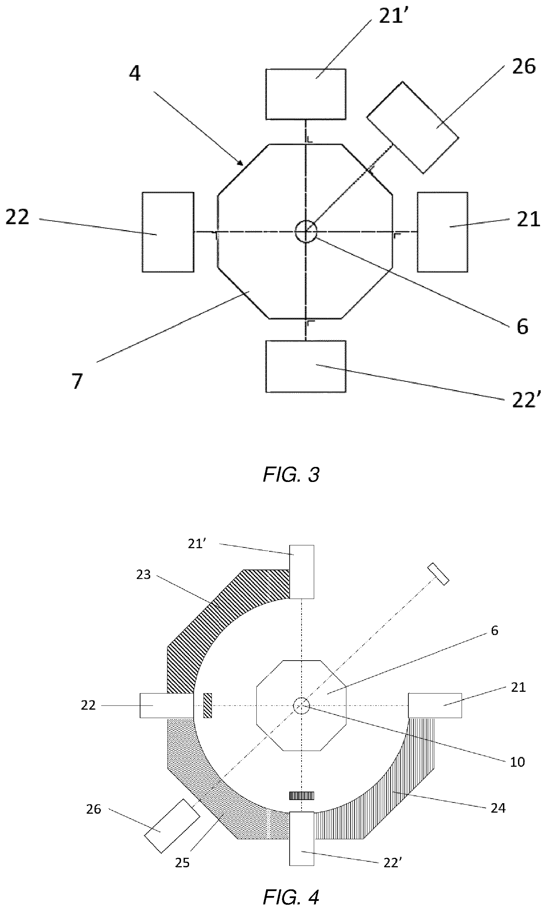

La cellule de mesure 4 comprend de plus au moins deux systèmes optiques 20, 20', agencés dans une zone de mesure, comme représenté sur les figures 3 et 4. Chaque système optique 20, 20' a pour fonctionnalité de capter une ou plusieurs images d'un composant horloger traversant la cellule de mesure 4, afin de permettre l'estimation d'une ou plusieurs dimensions du composant horloger sur la base de ces images.

Selon le mode de réalisation, chaque système optique 20, 20' comprend un émetteur lumineux 21, 21', de préférence pour émettre une lumière collimatée, opérant à une longueur d'onde prédéterminée, et un capteur optique 22, 22' associé à la source de lumière, par exemple une caméra CCD ou CMOS haute résolution. Avantageusement, un système optique 20, 20' comprend un émetteur lumineux 21, 21' et un capteur optique 22, 22' associé alignés, disposés de part et d'autre de la cellule de mesure 4. Le capteur optique 22, 22' est ainsi positionné à l'opposé de l'émetteur lumineux 21, 21', et détecte une ombre induite par le composant horloger positionné sur la trajectoire du faisceau lumineux émis par l'émetteur lumineux 21, 21', ce qui permet d'obtenir une définition très précise des bords du composant horloger à mesurer.

Le capteur optique 22, 22' peut être une caméra. Avantageusement, une telle caméra est sélectionnée pour avoir une fréquence de trame d'image supérieure ou égale à 30 fps (frames per second / images par seconde) en pleine résolution. Le temps d'exposition est optimisé pour minimiser le flou causé par la vitesse de déplacement du composant horloger. Par exemple, avec une fréquence de trame de 30 fps et un composant horloger se déplaçant à une vitesse de 108 mm/s, le temps d'exposition est de 16 µs.

Selon le mode de réalisation, la cellule de mesure 4 comprend deux systèmes optiques 20, 20'. Elle pourrait naturellement en variante comprendre trois ou quatre systèmes optiques. Ces deux systèmes optiques 20. 20' sont agencés tous les deux dans un même plan perpendiculaire à l'axe longitudinal de la cellule de mesure 4. La zone de mesure est donc sensiblement plane dans ce mode de réalisation. Ces au moins deux systèmes optiques 20, 20' sont angulairement décalés l'un par rapport à l'autre. Comme représenté par la figure 3, la cellule de mesure 4 présente une section extérieure polygonale, plus précisément octogonale. Elle présente ainsi des faces extérieures 7, planes et parallèles deux à deux. Chaque système optique 20, 20' est aligné selon une direction perpendiculaire à une de ces faces extérieures 7 planes, et de préférence sensiblement centré sur une ces faces extérieures 7 planes. Selon ce mode de réalisation, les deux systèmes optiques 20, 20' sont orientés de manière perpendiculaire entre eux. En variante, ils pourraient être agencés sur des faces adjacentes de la section polygonale, et présenter un angle entre eux de 45 degrés. En variante encore, la section extérieure de la cellule de mesure 4 pourrait présenter toute autre forme polygonale, par exemple carrée, rectangulaire, ou hexagonale. Les systèmes optiques pourraient ainsi présenter entre eux tout autre angle, par exemple de 60 degrés, 120 degrés ou de toute autre valeur. L'émetteur lumineux 21, 21' et le capteur optique 22, 22' associé sont agencés à une distance de la cellule de mesure 4 telle qu'ils présentent un plan focal au niveau du centre du canal de mesure 6. D'autre part, les faces extérieures 7 de la cellule de mesure 4 présentent une surface supérieure ou égale à la surface du champ de vision du système optique 20, 20' agencé en vis-à-vis. De plus, le champ de vue des capteurs optiques 22, 22' est ajusté aux dimensions des composants horlogers à mesurer afin que toutes les dimensions à déterminer soient enregistrées. D'autre part, les longueurs d'onde ou la polarisation des différents systèmes optiques 20, 20' sont sélectionnées de sorte que ces systèmes optiques 20, 20' n'interfèrent pas entre eux, ni plus généralement avec d'éventuels autres dispositifs optiques du dispositif de mesure 1. Ainsi, dans le mode de réalisation, les deux systèmes optiques 20, 20' sont conçus pour ne pas se perturber mutuellement. Le spectre lumineux des émetteurs lumineux 21, 21' des systèmes optiques 20, 20' peut être choisi tant dans le spectre visible que non-visible, incluant l'ultra-violet et l'infrarouge. Par exemple, un émetteur lumineux 21, 21' peut émettre dans l'UV, le violet, le bleu, le vert, le jaune ou le rouge. Les longueurs d'onde les plus faibles peuvent être préférables pour réduire la diffraction provoquée par les bords d'un composant horloger. Par ailleurs, du fait que les systèmes optiques opèrent à des longueurs d'onde distinctes, il devient possible de limiter, voire de supprimer, des artéfacts dus aux réflexions parasites des différents faisceaux lumineux et/ou accroître la sensibilité des capteurs optiques 22, 22'.

Selon le mode de réalisation, l'émetteur lumineux 21 du premier système optique 20 fonctionne à une longueur d'onde comprise entre 435 et 500 nm (bleu) et l'émetteur lumineux 21' du deuxième système optique 20' fonctionne à une longueur d'onde comprise entre 495 et 570 nm (vert).

En complément, les systèmes optiques 20, 20' sont avantageusement équipés de filtres passe-bande. Par exemple, pour un système optique fonctionnant dans le bleu, on sélectionnera un filtre passe-bande fonctionnant entre 435 et 500 nm (ce qui correspond à l'éclairage bleu) et pour un système optique fonctionnant dans le vert, on sélectionnera un filtre passe-bande fonctionnant entre 485 et 565 nm (ce qui correspond à l'éclairage vert).

Un capteur optique 22, 22' est de plus avantageusement équipé d'un filtre spectral afin de réduire les interactions potentielles des deux systèmes optiques 20, 20'. Le but est de conserver les informations du contour d'un composant horloger obtenues par la configuration rétroéclairée choisie, sans être perturbé par l'autre éclairage de l'autre système optique. Le filtre spectral est par exemple un filtre passe bande adapté. Le filtre est sélectionné en fonction de la réponse spectrale relative du capteur optique 22, 22' aux longueurs d'onde prédéterminées, afin d'éliminer les perturbations potentielles dues aux autres systèmes optiques 20', 20. Les filtres peuvent être installés entre la cellule de mesure 4 et le capteur optique 22, 22' ou directement intégrés aux objectifs des capteurs optiques 22, 22'. Les diamètres des objectifs étant bien supérieurs au champ de vision, il peut être avantageux de positionner un filtre entre la cellule de mesure 4 et un capteur optique 22, 22'.

La cellule de mesure 4 est avantageusement monobloc. Elle peut se présenter sous la forme d'un bloc de matière au moins partiellement transparente prismatique à base polygonale, agencé autour d'un axe de symétrie. Un canal de mesure (ou canal central) est agencé au centre de ce bloc, de préférence centré sur l'axe de symétrie. De préférence, l'axe du canal est sensiblement parallèle aux faces extérieures 7. La surface extérieure comprend donc une section polygonale, comme détaillé précédemment. La longueur de la cellule de mesure est de plus dimensionnée de manière à ce que la surface de chaque face extérieure 7 de la cellule de mesure 4 soit supérieure ou égale à la surface du champ de vision d'un système optique 20, 20' en vis-à-vis.

Comme mentionné précédemment, la surface extérieure de la cellule de mesure 4 peut prendre différentes formes polygonales. Elle comprend au minimum autant de paires de faces extérieures 7 parallèles opposées que de systèmes optiques et éventuellement autres capteurs. En remarque, les faces planes de la cellule de mesure 4 permettent de plus de faciliter le positionnement et l'alignement des capteurs optiques 22, 22'. Ainsi, pour une cellule de mesure 4 comprenant deux ou trois systèmes optiques 20, 20' et un capteur de passage 26, qui sera décrit par la suite, la cellule de mesure a avantageusement une forme d'un prisme de base octogonale, ce qui facilite les calculs dimensionnels ultérieurs. En variante, la cellule de mesure peut également ne comprendre que deux systèmes optiques 20, 20' dans un même plan. Dans une telle configuration, la cellule de mesure 4 peut avoir la forme d'un prisme de base rectangle ou carrée.

D'autre part, la cellule de mesure 4 est conçue dans un matériau transparent aux longueurs d'onde des différents systèmes optiques 20, 20' et/ou des autres dispositifs optiques, comme un capteur de passage 26.

En complément, son matériau constitutif est de préférence homogène et isotrope, afin de ne pas perturber les différents faisceaux lumineux. De plus, la cellule de mesure 4 présente avantageusement un indice de réfraction prédéterminé, conçu pour un bon comportement vis-à-vis des systèmes optiques 20, 20'. La table suivante illustre, non limitativement, quelques indices de réfraction typique de matériaux possibles, à 20°C.

| | 470 nm | 530 nm | 670 nm |
|---|---|---|---|
| Quartz | 1.46 | 1.46 | 1.45 |
| PMMA | 1.50 | 1.49 | 1.49 |
| Polycarbonate | 1.60 | 1.59 | 1.58 |
| Verre BK7 (crown) | 1.52 | 1.52 | 1.51 |
| Verre FK51 A | 1.49 | 1.49 | 1.49 |
| Saphir | 1.78 | 1.77 | 1.76 |

Notamment, le choix du matériau est tel que les parois du canal de mesure 6 de la cellule de mesure 4 forment une interface avec le fluide remplissant le canal de mesure 6 qui est invisible ou quasi-invisible pour les différents systèmes optiques, que le fluide soit immobile ou en écoulement laminaire. Ce résultat est d'abord favorisé par l'état de surface de ces parois du canal de mesure 6 : les surfaces de ces parois peuvent être rodées avec une rugosité Ra inférieure ou égale à 0.5 µm. D'autre part, les indices de réfraction respectivement du fluide remplissant le canal de mesure 6 et du matériau constitutif de la cellule de mesure 4 sont sélectionnés pour être sensiblement égaux, aux différentes longueurs d'onde des systèmes optiques implémentés. Dans cette configuration idéale, ils sont égaux et il n'y a pas de diffraction à l'interface entre le fluide et la cellule de mesure 4. En variante, ils présentent une faible différence, qui n'est pas ou très peu perceptible par les systèmes optiques, de sorte que leur effet sur les mesures est finalement négligeable. Pour cela, les indices de réfraction du matériau de la cellule de mesure 4 et du fluide diffèrent avantageusement de moins de 2%, voire de moins de 1%, voire de moins de 0,5%.

L'indice de réfraction du fluide est mesuré avec un réfractomètre d'Abbe (587 nm) à 20°C. La table suivante illustre, non limitativement, quelques indices de réfraction typiques de fluides envisageables.

| Fluide | Indice de réfraction à 20° à 587nm |
|---|---|
| Huile minérale | 1.40 - 1.60 |
| Huile silicone | 1.40 - 1.60 |
| Blasomill 22 | 1.49 |

Dans une variante de réalisation, la cellule de mesure 4 est constituée de plusieurs sections réalisées dans des matériaux différents, permettant de minimiser les écarts d'indice de réfraction entre la cellule de mesure et le fluide, pour chaque longueur d'onde utilisée par les différents systèmes optiques qui peuvent être répartis sur plusieurs sections. Les différents matériaux sont assemblés sous forme de sections assemblées ou de hublots.

Le mode de réalisation a été décrit sur la base d'une seule cellule de mesure 4 comprenant plusieurs systèmes optiques. En variante, il est également possible d'agencer plusieurs cellules de mesure 4 en série, chaque cellule de mesure étant optimisée pour la mesure de dimensions prédéterminées identiques ou différentes d'un même composant horloger.

Dans une variante de réalisation, une illumination complémentaire est utilisée pour mettre en exergue certaines spécificités d'un composant horloger à mesurer, particulièrement pour éclairer certaines zones qui seraient masquées en éclairage simple prévu par la configuration des seuls systèmes optiques 20, 20' tels que décrits ci-dessus et représentés selon la figure 3. Par exemple, certaines arêtes pourraient être masquées et non mesurables. L'illumination complémentaire permet ainsi de supprimer d'éventuelles zones d'ombre et de rajouter de l'information, par exemple pour la reconstruction d'ellipses ou de formes non symétriques. Une telle illumination complémentaire peut consister en un éclairage de type dôme ou en une combinaison d'un éclairage coaxial à 0° et d'un éclairage rasant à 90°. En variante, une telle illumination peut consister en l'ajout d'éclairages complémentaires à 45°. L'illumination complémentaire est sélectionnée pour être visible par au moins un des capteurs optiques 22, 22' d'un système optique 20, 20'. En fonction des structures à révéler, elle peut être polarisée, diffuse, ou directionnelle, etc.

La figure 4 illustre ainsi une telle variante de réalisation de la figure 3, dans laquelle des dispositifs d'éclairage complémentaires en demi-cercle ou en demi tore, opérant dans la longueur d'onde du système optique 20, 20' correspondant, sont positionnés de part et d'autre de chaque capteur optique 22, 22'. Un premier dispositif d'éclairage 23 présente une longueur d'onde égale ou sensiblement égale à celle du premier système optique 20 dont la caméra formant le capteur optique 22. De plus, il est disposé en vis-à-vis d'une face extérieure 7 de la cellule de mesure 4 adjacente à cette caméra. Un deuxième dispositif d'éclairage 24 présente une longueur d'onde égale ou sensiblement égale à celle du deuxième système optique 20'. Il est disposé en vis-à-vis d'une face extérieure 7 de la cellule de mesure 4 adjacente à la caméra formant le capteur optique 22' de ce deuxième système optique 20'. Enfin, un troisième dispositif d'éclairage 25 est disposé entre les deux caméras formant les deux capteurs optiques 22 des deux systèmes optiques 20 : l'éclairage de ce troisième système optique 20 cumule les deux longueurs d'onde correspondantes afin de permettre une visibilité par lesdites deux caméras.

En variante, le troisième dispositif d'éclairage 25 est obtenu en disposant une partie de premier dispositif d'éclairage 23 et une partie de deuxième dispositif d'éclairage 24 entre les deux caméras formant les deux capteurs optiques 22, 22' des deux systèmes optiques 20, 20' : l'éclairage cumulant ainsi les deux longueurs d'onde correspondantes.

En variante, les deux systèmes optiques peuvent être décalés, ne pas se trouver dans un même plan. Dans une telle variante, chaque dispositif d'éclairage complémentaire peut présenter une forme en deux demi-cercles répartis autour d'un capteur optique (une caméra), pour éclairer une moitié d'un composant horloger qui passe face à la caméra.

Naturellement, en variante, tout autre type de système optique pourrait être utilisé, ainsi que tout autre éclairage associé.

De manière optionnelle, un ou plusieurs capteurs de passage 26 peuvent de plus être utilisés pour déterminer la présence d'un composant horloger au sein d'une cellule de mesure 4 et/ou pour déterminer la vitesse de passage d'un composant horloger dans la cellule de mesure 4. Par exemple, un capteur de passage 26 peut être intégré au même niveau que les systèmes optiques 20, 20', c'est-à-dire dans le même plan, comme représenté par les figures 3 et 4. En variante, un tel capteur de passage 26 peut être agencé en amont des systèmes optiques.

Lorsqu'un capteur de passage 26 est intégré au même niveau que les au moins deux systèmes optiques 20, 20', il est avantageux de choisir un capteur opérant dans une longueur d'onde distincte des longueurs d'onde desdits systèmes optiques 20, 20', pour éviter toute interférence. Par exemple, pour des systèmes optiques 20, 20' opérant dans les longueurs d'onde du bleu et du vert, selon l'exemple décrit précédemment, il est possible de sélectionner un capteur de passage 26 opérant dans la longueur d'onde du rouge, c'est-à-dire par exemple sous la forme d'un laser opérant à une longueur d'onde de 670 nm. De cette manière, le reflet induit par le capteur de passage 26 sur un composant horloger ne sera pas visible par les capteurs optiques 22, 22' des systèmes optiques 20, 20'. Le capteur de passage peut détecter le composant horloger directement ou par l'intermédiaire du reflet du laser sur un réflecteur, et être un capteur barrage, comme représenté par la figure 4. Avantageusement, le capteur de passage 26 est conçu pour couvrir toute la largeur du canal de mesure afin de détecter un composant avec précision, quelle que soit son orientation dans le canal de mesure.

Dans tous les cas, un capteur de passage 26 participe à la synchronisation des systèmes optiques, c'est-à-dire transmet une information qui permet de déclencher les au moins deux systèmes optiques simultanément lors de la présence d'un composant horloger à mesurer. Ce capteur de passage transmet plus précisément une information à une unité de pilotage, qui va être décrite ci-dessous, sous la forme de données représentant un intervalle temporel correspondant à la présence d'un composant horloger dans la cellule de mesure.

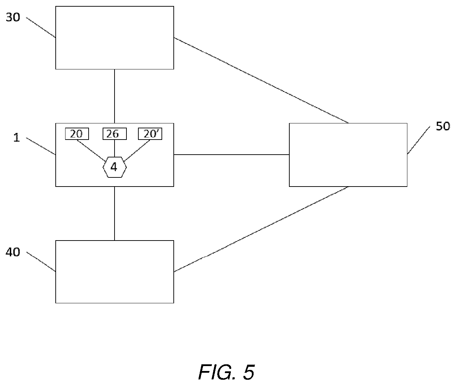

Le dispositif de mesure 1 comprend enfin une unité de pilotage 50, comme représenté sur la figure 5, qui pilote les systèmes optiques 20, 20' et les éventuels autres capteurs du dispositif de mesure. L'unité de pilotage 50 comprend ainsi des moyens matériel et/ou logiciel, notamment au moins un calculateur et au moins une mémoire, pour procéder au traitement des données numériques provenant des systèmes optiques et des éventuels autres capteurs. Sur cette base, le dispositif de mesure met en œuvre un procédé de calcul d'une ou de plusieurs mesures d'un composant horloger. De plus, le dispositif de mesure 1 comprend des dispositifs de communication, agencés entre les systèmes optiques et les éventuels capteurs et l'unité de pilotage, de sorte de permettre l'échange des données numériques entre ces éléments.

Dans une variante, l'unité de mesure ou une deuxième unité de mesure est positionnée en amont de l'unité d'usinage afin de connaître les dimensions des pièces à l'entrée du procédé.

Un principe de calcul d'une mesure d'un composant horloger selon le mode de réalisation va maintenant être détaillé. Comme mentionné précédemment, les au moins deux systèmes optiques 20, 20' prennent des images simultanées d'un même composant horloger. Ces images permettent d'obtenir des données numériques de représentation du même composant horloger, au même instant, et selon différentes orientations. Chacune des images peut comprendre des erreurs de parallaxe, qui sont corrigées par le fait d'utiliser au moins deux images différentes.

A titre d'exemple, nous allons considérer par la suite un composant horloger comprenant une forme organisée autour d'un axe de symétrie, comme un axe de balancier par exemple, qui peut se présenter simplement comme l'agencement de plusieurs portions cylindriques de diamètres différents agencées autour de cet axe de symétrie. Dans un tel cas, une mesure utile peut être le diamètre maximal du composant horloger, voire tout autre diamètre obtenu sur une certaine section. En complément, une autre mesure utile peut être la longueur du composant horloger, mesurée le long de son axe de symétrie. De manière similaire, cette approche s'applique aussi à tout composant présentant une quasi symétrie autour d'un axe.

Le premier système optique 20 du dispositif de mesure permet de mesurer pour un composant horloger des dimensions dans un premier plan X, par exemple au moins une longueur Lₓ et au moins un diamètre Dₓ. En complément, un premier angle αₓ du composant horloger par rapport à l'axe de son canal de mesure, soit la direction longitudinale, formant une direction de référence de la cellule de mesure, est mesuré.

Un deuxième système optique 20' permet de mesurer les mêmes mesures pour le même composant horloger, mais dans un deuxième plan Y, du fait de l'orientation différente du deuxième système optique, ce qui permet d'obtenir une longueur L_{y} et au moins un diamètre D_{y}. Un deuxième angle α_{y} du composant horloger est mesuré par rapport à l'axe de son canal de mesure, soit la direction longitudinale.

Il est possible de répéter les mesures précédentes pour chaque éventuel autre système optique, dans le cas où le dispositif de mesure comprend plus de deux systèmes optiques.

En remarque, pour des composants cylindriques ou de forme symétrique autour d'un axe, comme mentionné ci-dessus, deux systèmes optiques suffisent pour atteindre la précision recherchée. Pour un composant horloger de forme tridimensionnelle plus complexe, un troisième système optique, voire un quatrième ou plus encore, pourraient être nécessaires.

Les différentes images obtenues par chaque système optique permettent de calculer la longueur effective d'un composant horloger, à partir des longueurs visibles sur chaque image, en prenant en compte les angles αₙ susmentionnés. Chaque mesure obtenue est éventuellement entachée d'erreur de parallaxe ou de projection. Toutefois, une mesure corrigée est obtenue par traitement mathématique. Cette approche permet ainsi de corriger les erreurs de parallaxe.

Dans une variante, lorsque les images prises par les différents systèmes optiques se recouvrent partiellement, une reconstitution stéréoscopique peut venir compléter les mesures.

En remarque, le principe décrit ci-dessus s'applique dans le cas où au moins deux systèmes optiques 20, 20' ont procédé à la saisie simultanée d'une image du même composant horloger. Cet instant de saisie des vues peut être optimisé par le recours à un éventuel capteur de passage 26, comme expliqué précédemment, sous le contrôle de l'unité de pilotage. En variante, une horloge peut simplement permettre la coordination des au moins deux systèmes optiques. Selon une variante de réalisation, ces systèmes optiques 20, 20' peuvent prendre chacun plusieurs vues successives du même composant horloger, par exemple en rafale, tout en restant coordonnés entre eux pour que ces vues restent simultanées entre chaque système optique. Une telle variante permet de prendre en compte plusieurs vues par système optique, ce qui augmente encore la précision.

L'unité de pilotage 50 du dispositif de mesure peut aussi comprendre des dispositifs de communication pour communiquer automatiquement avec des dispositifs externes complémentaires, comme une unité de tri 40 ou une unité de nettoyage en aval, et/ou une unité d'usinage en amont.

A titre d'exemple avantageux, l'unité de pilotage ou toute unité complémentaire peut effectuer une estimation qualitative d'un composant horloger, par une étape de comparaison d'au moins une mesure calculée avec une mesure théorique attendue, qui forme une valeur de référence. En fonction de cette comparaison, il est possible de déterminer si la qualité obtenue est satisfaisante ou non, par comparaison avec un seuil de qualité prédéterminé par exemple. En complément, si la qualité du composant horloger est insuffisante, une étape complémentaire de correction automatique de l'unité d'usinage peut être mise en œuvre, en traduisant la mauvaise mesure obtenue en réglage de l'unité d'usinage. Cette approche peut être réitérée plusieurs fois jusqu'à atteindre une mesure satisfaisante. En remarque, selon une variante de réalisation avantageuse, le contrôle et/ou la correction d'une machine d'usinage est réalisé en temps réel ou en quasi temps réel, par exemple sur la base d'un asservissement court. Un éventuel pilotage d'une unité aval peut aussi être géré de manière automatique et/ou en temps réel ou quasi temps réel par l'unité de pilotage. Une telle unité aval peut par exemple être une unité de tri des composants horlogers, selon la conformité ou non des mesures effectuées, selon des lots par gammes de dimensions, selon des lots comprenant un nombre de composants prédéterminé, etc.

Ainsi, l'invention porte aussi sur un dispositif de fabrication d'un composant horloger, caractérisé en ce qu'il comprend une unité d'usinage et un dispositif de mesure tel que décrit précédemment, comprenant une partie d'introduction permettant la transmission au dispositif de mesure d'un composant horloger issu de l'unité d'usinage, sans nettoyage préalable.

Le dispositif de mesure peut aussi comprendre une interface homme-machine, qui peut être reliée à l'unité de pilotage. L'interface homme-machine peut comprendre un écran d'affichage sur lequel la ou les mesures calculées sont affichées. Cette interface homme-machine peut aussi afficher une valeur de référence de chaque mesure, un résultat du diagnostic de qualité d'un composant horloger, et/ou des valeurs de réglage d'une machine d'usinage. L'interface homme-machine peut encore comprendre des moyens de saisie de données et de commandes par un opérateur.

Comme mentionné précédemment, le dispositif de mesure selon l'invention permet de mesurer un composant horloger se présentant sous une forme d'objet de révolution. Un composant horloger peut être de taille millimétrique. Il permet naturellement aussi de mesurer des dimensions de tout composant horloger, qui peut se présenter sous toute forme, non uniquement selon un objet de révolution.

Plus généralement, l'invention présente les avantages suivants :
- Elle est adaptée à la réalisation d'au moins une mesure d'un composant horloger selon des cadences élevées, notamment par le fait qu'elle est mise en œuvre sur un composant horloger en mouvement et qu'elle évite de positionner un composant horloger de manière statique sur un posage pour procéder à sa mesure ;
- Elle permet aussi d'obtenir une grande précision et de ne pas subir un phénomène de distorsion des grandeurs optiques en fonction de la distance de travail, d'un gauchissement du composant horloger dû à sa non perpendicularité dans le champ optique, et des effets de diffraction et de diffusion de la lumière rasante sur les bords du composant ;
- Elle est adaptée pour pouvoir fonctionner dans un environnement compatible à celui de l'usinage. En effet, elle s'applique notamment à un composant horloger placé dans un liquide de viscosité cinématique prédéterminée, compatible avec la récupération d'un composant horloger dès sa sortie d'une machine d'usinage, éventuellement recouvert d'huile utilisée par ladite machine, sans besoin de nettoyer le composant horloger ;
- Elle est simple car la mesure est effectuée sur un composant horloger libre, c'est-à-dire en mouvement libre en immersion dans un liquide.

En résumé, comme cela ressort de la description précédente, le dispositif de mesure selon l'invention permet de guider un composant horloger par un système de convoyage jusqu'à une cellule de mesure, de manière à ce qu'il passe dans une zone de mesure, c'est-à-dire dans le plan focal des au moins deux systèmes optiques du dispositif de mesure, à une vitesse prédéterminée. Dans cette zone de mesure, les systèmes optiques collectent simultanément une ou plusieurs images chacun. Ces images sont transmises sous format de données numériques à une unité de pilotage, qui comprend notamment un logiciel d'analyse d'images, lui permettant d'extraire les dimensions recherchées du composant horloger, en prenant en compte les mesures simultanées de chaque système optique. Les dimensions obtenues permettent au minimum de transmettre un résultat sur la qualité des composants horlogers fabriqués, et éventuellement de procéder à un suivi rapide des dérives d'usinage, et d'ajuster/corriger des paramètres d'usinage, voire d'arrêter une machine d'usinage et de limiter le nombre de composants horlogers non conformes en interagissant avec l'unité de contrôle de la machine d'usinage et/ou en transmettant des informations en temps réel à un opérateur de ladite machine d'usinage.

L'invention porte aussi sur un procédé de mesure d'un composant horloger, mis en œuvre par l'unité de pilotage du dispositif de mesure décrit précédemment, qui comprend les étapes suivantes :
- Mise en mouvement d'un composant horloger au sein d'un liquide dans un canal de mesure d'une cellule de mesure ;
- Optionnellement, détection du composant horloger par un capteur de détection et transmission des données de détection à une unité de pilotage ;
- Pilotage d'au moins deux systèmes optiques par une unité de pilotage pour la prise d'images simultanées au moment du passage du composant horloger dans une zone de mesure d'une cellule de mesure ;
- Transmission de données numériques représentatives des images obtenues par les au moins deux systèmes optiques à une unité de pilotage ;
- Calcul d'au moins une dimension du composant horloger par un calculateur de l'unité de pilotage à partir desdites données numériques.

Le procédé de mesure d'un composant horloger peut comprendre la prise simultanée de plusieurs images pendant un déplacement libre du composant horloger, selon une vitesse de déplacement présentant une composante non nulle selon la direction longitudinale du canal de mesure d'une cellule de mesure, ladite vitesse étant comprise entre 70 et 180 mm/s inclus.

En complément, l'invention porte aussi sur un procédé de fabrication d'un composant horloger, comprenant la mise en œuvre du procédé de mesure décrit précédemment, et qui comprend de plus tout ou partie des étapes supplémentaires suivantes :
- comparaison des dimensions du composant horloger calculées par ledit calculateur de l'unité de pilotage avec des dimensions de référence pour déterminer si le composant horloger est conforme ou non ;
- transport du composant vers une zone de stockage dédiée, en fonction du résultat de la comparaison;
- en cas de composant horloger non conforme, calcul de données de correction d'usinage en fonction des dimensions calculées du composant horloger, et transmission des données de correction vers une unité d'usinage, et/ou transmission d'une alerte vers un opérateur.

Ce procédé de fabrication comprend de plus avantageusement une phase préalable de fabrication d'un composant horloger par l'intermédiaire d'une machine d'usinage. Il comprend de plus le guidage d'un composant horloger issu de cette machine d'usinage directement vers le dispositif de mesure, sans nettoyage préalable.

Naturellement, l'invention peut s'appliquer à tout composant horloger, comme un axe de balancier, tout autre axe, ou un pignon, un composant horloger de révolution, avec une symétrie cylindrique, ou un composant horloger non cylindrique ou non symétrique, comme le carré ou le crochet d'un arbre de barillet.

## Revendications

1. Dispositif de mesure (1) d'un composant horloger, comprenant :
a. Une cellule de mesure (4) comprenant :
i. Un canal de mesure (6) s'étendant selon une direction longitudinale et rempli par un liquide, apte au déplacement d'un composant horloger ;
ii. Des faces extérieures (7) planes et parallèles deux à deux,
b. Au moins deux systèmes optiques (20, 20') positionnés dans un même plan perpendiculaire à la direction longitudinale du canal de mesure (6), ces au moins deux systèmes optiques (20, 20') étant angulairement décalés l'un par rapport à l'autre, et agencés en vis-à-vis d'au moins une partie des faces extérieures (7) de la cellule de mesure (4) au niveau d'une zone de mesure de la cellule de mesure (4), chaque système optique (20, 20') comprenant :
i. Un émetteur lumineux (21, 21') adapté pour émettre une lumière collimatée dans une longueur d'onde prédéfinie ou une polarisation définie en direction du canal de mesure (6) au travers une face extérieure (7) de la cellule de mesure (4), de manière apte à éclairer un composant horloger présent et se déplaçant dans le canal de mesure (6) au niveau de la zone de mesure, et
ii. Un capteur optique (22, 22') associé audit émetteur lumineux (21, 21') pour recevoir au moins une partie de la lumière émise par ledit émetteur lumineux (21, 21'),
lesdits au moins deux systèmes optiques (20, 20') comprenant des émetteurs lumineux (21, 21') respectifs opérant dans des longueurs d'onde ou des polarisations respectives différentes,
c. Une unité de pilotage (50), apte au pilotage des systèmes optiques (20, 20') et au traitement des données numériques issues des systèmes optiques, configurée pour mettre en œuvre des calculs d'au moins une dimension d'un composant horloger.

2. Dispositif de mesure d'un composant horloger selon la revendication précédente, **caractérisé en ce que** la cellule de mesure (4) est en matériau transparent aux longueurs d'onde desdits au moins deux systèmes optiques (20, 20'), **en ce qu'**elle présente une section extérieure polygonale qui forme lesdites faces extérieures (7), ces faces extérieures (7) présentant une surface supérieure ou égale à la surface du champ de vision d'un système optique (20, 20') agencé en vis-à-vis, et **en ce qu'**elle présente une section intérieure arrondie délimitant le canal de mesure (6), sans arête vive, notamment circulaire ou ellipsoïdale.

3. Dispositif de mesure d'un composant horloger selon l'une des revendications précédentes, **caractérisé en ce qu'**il comprend au moins deux systèmes optiques (20, 20') dont les émetteurs lumineux (21, 21') respectifs opèrent à une longueur d'onde respective comprise entre 435 et 500 nm et entre 495 et 570 nm.

4. Dispositif de mesure d'un composant horloger selon l'une des revendications précédentes, **caractérisé en ce que** ledit canal de mesure (6) de la cellule de mesure (4) est agencé pour permettre le libre déplacement du composant horloger, dans un liquide statique par gravitation ou par entrainement par le liquide en écoulement laminaire et/ou par gravitation, notamment à une vitesse constante contrôlée dans le canal de mesure (6) au niveau de la zone de mesure.

5. Dispositif de mesure d'un composant horloger selon la revendication précédente, **caractérisé en ce qu'**il est agencé pour le déplacement d'un composant horloger à une vitesse comprise entre 70 et 180 mm/s inclus, et comprenant au moins une composante de déplacement non nulle selon la direction longitudinale du canal de mesure (6).

6. Dispositif de mesure d'un composant horloger selon l'une des revendications précédentes, **caractérisé en ce que** ledit liquide du canal de mesure (6) est un liquide de viscosité cinétique comprise entre 2 et 50 mm²/s, notamment une huile de coupe, une huile minérale, une huile végétale, une émulsion, une microémulsion, ou un fluide synthétique.

7. Dispositif de mesure d'un composant horloger selon l'une des revendications précédentes, **caractérisé en ce que** les indices de réfraction du liquide et du matériau de la cellule de mesure sont sensiblement identiques.

8. Dispositif de mesure d'un composant horloger selon l'une des revendications précédentes, **caractérisé en ce qu'**il comprend en outre des dispositifs d'éclairage (23, 24, 25) complémentaires agencés du côté de capteurs optiques (22, 22') des au moins deux systèmes optiques (20, 20') pour améliorer la perception desdits au moins deux systèmes optiques (20, 20').

9. Dispositif de mesure d'un composant horloger selon l'une des revendications précédentes, **caractérisé en ce que** l'unité de pilotage est configurée pour le pilotage des au moins deux systèmes optiques (20, 20') de sorte à synchroniser les au moins deux systèmes optiques (20, 20') pour qu'ils prennent chacun au moins une image simultanée d'un même composant horloger.

10. Dispositif de mesure d'un composant horloger selon l'une des revendications précédentes, **caractérisé en ce que** l'unité de pilotage comprend un calculateur configuré pour mettre en œuvre des calculs d'au moins une dimension d'un composant horloger par un programme d'ordinateur, pour évaluer sa conformité ou non par rapport à des données de référence.

11. Dispositif de mesure d'un composant horloger selon la revendication précédente, **caractérisé en ce que** ledit calculateur est configuré pour effectuer le calcul d'une longueur d'un composant horloger, d'une dimension transversale à cette longueur, qui correspond sensiblement au diamètre d'un composant horloger quand ce dernier présente une symétrie de révolution, et d'un angle entre la direction de cette longueur et la direction longitudinale du canal de mesure (6).

12. Dispositif de mesure d'un composant horloger selon l'une des revendications précédentes, **caractérisé en ce qu'**il comprend un capteur de détection (26) apte à détecter la présence et optionnellement la vitesse d'un composant horloger se déplaçant dans le canal de mesure (6) de la cellule de mesure (4).

13. Dispositif de mesure d'un composant horloger selon la revendication précédente, **caractérisé en ce que** le capteur de détection (26) fonctionne sur la base d'une longueur d'onde différente de celle des au moins deux systèmes optiques (20, 20').

14. Dispositif de mesure d'un composant horloger selon l'une des revendications précédentes, **caractérisé en ce qu'**il comprend un agencement permettant le transport en entrée et l'orientation d'un composant horloger vers le canal de mesure (6) de la cellule de mesure (4), apte à un transport direct sans lavage d'un composant horloger depuis la sortie d'une machine d'usinage jusqu'audit canal de mesure (6), et/ou **en ce qu'**il comprend un agencement permettant le transport d'un composant horloger en sortie du canal de mesure (6), et son orientation vers une unité de lavage, de stockage, et/ou de mise à l'écart, en fonction de la conformité de la ou des dimensions calculées.

15. Dispositif de mesure d'un composant horloger selon l'une des revendications précédentes, **caractérisé en ce qu'**il est apte à la mesure d'un composant horloger de révolution, avec une symétrie cylindrique, comme un axe de balancier et/ou d'un composant horloger non cylindrique ou non symétrique, comme le carré ou le crochet d'un arbre de barillet.

16. Dispositif de fabrication d'un composant horloger, **caractérisé en ce qu'**il comprend une unité d'usinage et un dispositif de mesure (1) selon l'une des revendications précédentes, et **en ce qu'**il comprend une partie d'introduction (2) permettant le transport d'un composant horloger depuis la sortie de l'unité d'usinage jusqu'à une cellule de mesure (4) du dispositif de mesure (1) sans nettoyage intermédiaire, et optionnellement un dispositif de communication configuré pour une transmission automatique d'une commande de correction du dispositif d'usinage par le dispositif de mesure (1) en fonction d'au moins une dimension calculée par le dispositif de mesure (1) d'un composant horloger issu du dispositif d'usinage.

17. Procédé de mesure d'un composant horloger, **caractérisé en ce qu'**il comprend les étapes suivantes :
- Mise en mouvement d'un composant horloger au sein d'un liquide dans un canal de mesure (6) d'une cellule de mesure (4) ;
- Optionnellement, détection du composant horloger par un capteur de détection (26) et transmission des données de détection à une unité de pilotage ;
- Pilotage d'au moins deux systèmes optiques (20, 20') positionnés dans un même plan perpendiculaire à la direction longitudinale du canal de mesure (6), ces au moins deux systèmes optiques (20, 20') étant angulairement décalés l'un par rapport à l'autre, par une unité de pilotage pour la prise d'images simultanée au moment du passage du composant horloger dans une zone de mesure d'une cellule de mesure (4) ;
- Transmission de données numériques représentatives des images obtenues par les au moins deux systèmes optiques (20, 20') à une unité de pilotage ;
- Calcul d'au moins une dimension du composant horloger par un calculateur de l'unité de pilotage à partir desdites données numériques.

18. Procédé de mesure d'un composant horloger selon la revendication précédente, **caractérisé en ce qu'**il comprend la prise simultanée de plusieurs images pendant un déplacement libre du composant horloger, selon une vitesse de déplacement présentant une composante non nulle selon la direction longitudinale du canal de mesure (6) d'une cellule de mesure (4), ladite vitesse étant comprise entre 70 et 180 mm/s inclus.

19. Procédé de mesure d'un composant horloger selon la revendication 17 ou 18, **caractérisé en ce qu'**il comprend tout ou partie des étapes supplémentaires suivantes :
- comparaison d'au moins une dimension du composant horloger calculée par ledit calculateur de l'unité de pilotage avec au moins une dimension de référence pour déterminer si le composant horloger est conforme ou non ;
- transport dudit composant horloger vers une zone de stockage dédiée ;
- en cas de composant horloger non conforme, calcul d'au moins une donnée de correction d'usinage en fonction de la au moins une dimension calculée du composant horloger, et transmission de la au moins une donnée de correction vers une unité d'usinage, et/ou transmission d'une alerte vers un opérateur.

## Patentansprüche

1. Vorrichtung (1) zum Messen einer Uhrenkomponente, umfassend:
a. eine Messzelle (4), umfassend:
i. einen sich entlang einer Längsrichtung erstreckenden und mit einer Flüssigkeit gefüllten Messkanal (6), der zum Bewegen einer Uhrenkomponente geeignet ist;
ii. plane und paarweise parallele Außenseiten (7),
b. mindestens zwei optische Systeme (20, 20'), die in einer selben senkrecht zu der Längsrichtung des Messkanals (6) verlaufenden Ebene angeordnet sind, wobei diese mindestens zwei optischen Systeme (20, 20') winklig zueinander versetzt sind und gegenüber mindestens einem Teil der Außenseiten (7) der Messzelle (4) an einem Messbereich der Messzelle (4) eingerichtet sind, wobei jedes optische System (20, 20') umfasst:
i. einen Lichtemitter (21, 21'), der dazu angepasst ist, ein kollimiertes Licht in einer vorgegebenen Wellenlänge oder einer vorgegebenen Polarisation in Richtung des Messkanals (6) durch eine Außenseite (7) der Messzelle (4) hindurch zu emittieren, so dass eine vorhandene und sich in dem Messkanal (6) an dem Messbereich bewegende Uhrenkomponente beleuchtet wird, und
ii. einen optischen Sensor (22, 22'), der dem Lichtemitter (21, 21') zugeordnet ist, um mindestens einen Teil des von dem Lichtemitter (21, 21') emittierten Lichts zu empfangen,
wobei die mindestens zwei optischen Systeme (20, 20') jeweilige Lichtemitter (21, 21') umfassen, die in unterschiedlichen jeweiligen Wellenlängen oder Polarisationen arbeiten,
c. eine Steuerungseinheit (50), die zur Steuerung der optischen Systeme (20, 20') und zur Verarbeitung der aus den optischen Systemen hervorgegangenen numerischen Daten geeignet ist und dazu ausgestaltet ist, Berechnungen mindestens eines Maßes einer Uhrenkomponente durchzuführen.

2. Vorrichtung zum Messen einer Uhrenkomponente nach dem vorhergehenden Anspruch, **dadurch gekennzeichnet, dass** die Messzelle (4) aus für die Wellenlängen der mindestens zwei optischen Systeme (20, 20') durchlässigem Material ist, dass sie einen polygonalen äußeren Querschnitt aufweist, der die Außenseiten (7) bildet, wobei diese Außenseiten (7) eine Fläche aufweisen, die größer oder gleich der Fläche des Sichtfelds eines gegenüber eingerichteten optischen Systems (20, 20') ist, und dass sie einen den Messkanal (6) begrenzenden abgerundeten inneren Querschnitt ohne scharfe Kanten, der insbesondere kreisförmig oder ellipsoid ist, aufweist.

3. Vorrichtung zum Messen einer Uhrenkomponente nach einem der vorhergehenden Ansprüche, **dadurch gekennzeichnet, dass** sie mindestens zwei optische Systeme (20, 20') umfasst, deren jeweilige Lichtemitter (21, 21') mit einer jeweiligen Wellenlänge zwischen 435 und 500 nm und zwischen 495 und 570 nm arbeiten.

4. Vorrichtung zum Messen einer Uhrenkomponente nach einem der vorhergehenden Ansprüche, **dadurch gekennzeichnet, dass** der Messkanal (6) der Messzelle (4) dazu eingerichtet ist, die freie Bewegung der Uhrenkomponente in einer statischen Flüssigkeit durch Schwerkraft oder durch Mitführen durch die Flüssigkeit in laminarer Strömung und/oder durch Schwerkraft zu ermöglichen, insbesondere mit einer kontrollierten konstanten Geschwindigkeit in dem Messkanal (6) an dem Messbereich.

5. Vorrichtung zum Messen einer Uhrenkomponente nach dem vorhergehenden Anspruch, **dadurch gekennzeichnet, dass** sie zum Bewegen einer Uhrenkomponente mit einer Geschwindigkeit zwischen 70 und 180 mm/s einschließlich eingerichtet ist, und umfassend mindestens eine Bewegungskomponente ungleich null entlang der Längsrichtung des Messkanals (6).

6. Vorrichtung zum Messen einer Uhrenkomponente nach einem der vorhergehenden Ansprüche, **dadurch gekennzeichnet, dass** die Flüssigkeit des Messkanals (6) eine Flüssigkeit mit einer kinetischen Viskosität zwischen 2 und 50 mm²/s ist, insbesondere ein Schneidöl, ein Mineralöl, ein pflanzliches Öl, eine Emulsion, eine Mikroemulsion oder ein synthetisches Fluid.

7. Vorrichtung zum Messen einer Uhrenkomponente nach einem der vorhergehenden Ansprüche, **dadurch gekennzeichnet, dass** die Brechungsindizes der Flüssigkeit und des Materials der Messzelle im Wesentlichen gleich sind.

8. Vorrichtung zum Messen einer Uhrenkomponente nach einem der vorhergehenden Ansprüche, **dadurch gekennzeichnet, dass** sie ferner komplementäre Beleuchtungsvorrichtungen (23, 24, 25) umfasst, die auf der Seite von optischen Sensoren (22, 22') der mindestens zwei optischen Systeme (20, 20') eingerichtet sind, um die Perzeption der mindestens zwei optischen Systeme (20, 20') zu verbessern.

9. Vorrichtung zum Messen einer Uhrenkomponente nach einem der vorhergehenden Ansprüche, **dadurch gekennzeichnet, dass** die Steuerungseinheit zur Steuerung der mindestens zwei optischen Systeme (20, 20') ausgestaltet ist, so dass die mindestens zwei optischen Systeme (20, 20') synchronisiert werden, damit sie jeweils mindestens ein gleichzeitiges Bild einer selben Uhrenkomponente aufnehmen.

10. Vorrichtung zum Messen einer Uhrenkomponente nach einem der vorhergehenden Ansprüche, **dadurch gekennzeichnet, dass** die Steuerungseinheit einen Rechner umfasst, der dazu ausgestaltet ist, Berechnungen mindestens eines Maßes einer Uhrenkomponente durch ein Computerprogramm durchzuführen, um ihre Konformität oder nicht in Bezug auf Referenzdaten zu beurteilen.

11. Vorrichtung zum Messen einer Uhrenkomponente nach dem vorhergehenden Anspruch, **dadurch gekennzeichnet, dass** der Rechner dazu ausgestaltet ist, die Berechnung einer Länge einer Uhrenkomponente, eines Maßes quer zu dieser Länge, das im Wesentlichen dem Durchmesser einer Uhrenkomponente entspricht, wenn Letztere eine Rotationssymmetrie aufweist, und eines Winkels zwischen der Richtung dieser Länge und der Längsrichtung des Messkanals (6) durchzuführen.

12. Vorrichtung zum Messen einer Uhrenkomponente nach einem der vorhergehenden Ansprüche, **dadurch gekennzeichnet, dass** sie einen Detektionssensor (26) umfasst, der geeignet ist, das Vorhandensein und optional die Geschwindigkeit einer Uhrenkomponente, die sich in dem Messkanal (6) der Messzelle (4) bewegt, zu detektieren.

13. Vorrichtung zum Messen einer Uhrenkomponente nach dem vorhergehenden Anspruch, **dadurch gekennzeichnet, dass** der Detektionssensor (26) auf der Basis einer Wellenlänge funktioniert, die verschieden von derjenigen der mindestens zwei optischen Systeme (20, 20') ist.

14. Vorrichtung zum Messen einer Uhrenkomponente nach einem der vorhergehenden Ansprüche, **dadurch gekennzeichnet, dass** sie eine Anordnung umfasst, die den Transport zum Eingang und das Ausrichten einer Uhrenkomponente zu dem Messkanal (6) der Messzelle (4) hin ermöglicht und für einen direkten Transport ohne Waschen einer Uhrenkomponente von dem Ausgang einer Bearbeitungsmaschine bis zu dem Messkanal (6) geeignet ist, und/oder dass sie eine Anordnung umfasst, die den Transport einer Uhrenkomponente am Ausgang des Messkanals (6) und ihre Ausrichtung zu einer Reinigungs-, Lagerungs- und/oder Aussonderungseinheit hin in Abhängigkeit von der Konformität des oder der berechneten Maße ermöglicht.

15. Vorrichtung zum Messen einer Uhrenkomponente nach einem der vorhergehenden Ansprüche, **dadurch gekennzeichnet, dass** sie zum Messen einer drehenden Uhrenkomponente mit einer zylindrischen Symmetrie wie einer Unruhwelle und/oder einer nicht zylindrischen oder nicht symmetrischen Uhrenkomponente wie dem Vierkant oder dem Haken einer Federwelle geeignet ist.

16. Vorrichtung zur Herstellung einer Uhrenkomponente, **dadurch gekennzeichnet, dass** sie eine Bearbeitungseinheit und eine Vorrichtung (1) zum Messen nach einem der vorhergehenden Ansprüche umfasst und dass sie einen Einführungsteil (2) umfasst, der den Transport einer Uhrenkomponente vom Ausgang der Bearbeitungseinheit bis zu einer Messzelle (4) der Vorrichtung (1) zum Messen ohne Zwischenreinigung ermöglicht, und optional eine Kommunikationsvorrichtung, die zu einer automatischen Übertragung eines Befehls zur Korrektur der Bearbeitungsvorrichtung durch die Vorrichtung (1) zum Messen in Abhängigkeit von mindestens einem von der Vorrichtung (1) zum Messen berechneten Maß einer aus der Bearbeitungsvorrichtung hervorgegangenen Uhrenkomponente ausgestaltet ist.

17. Verfahren zum Messen einer Uhrenkomponente, **dadurch gekennzeichnet, dass** es die folgenden Schritte umfasst:
- Versetzen einer Uhrenkomponente in Bewegung innerhalb einer Flüssigkeit in einem Messkanal (6) einer Messzelle (4);
- optional, Detektieren der Uhrenkomponente durch einen Detektionssensor (26) und Übertragen der Detektionsdaten zu einer Steuerungseinheit;
- Steuern von mindestens zwei optischen Systemen (20, 20'), die in einer selben senkrecht zu der Längsrichtung des Messkanals (6) verlaufenden Ebene angeordnet sind, wobei diese mindestens zwei optischen Systeme (20, 20') winklig zueinander versetzt sind, durch eine Steuerungseinheit zum gleichzeitigen Aufnehmen von Bildern zum Zeitpunkt des Vorbeilaufens der Uhrenkomponente in einem Messbereich einer Messzelle (4);
- Übertragen von numerischen Daten, die für die von den mindestens zwei optischen Systemen (20, 20') erhaltenen Bilder repräsentativ sind, zu einer Steuerungseinheit;
- Berechnen mindestens eines Maßes der Uhrenkomponente durch einen Rechner der Steuerungseinheit ausgehend von den numerischen Daten.

18. Verfahren zum Messen einer Uhrenkomponente nach dem vorhergehenden Anspruch, **dadurch gekennzeichnet, dass** es das gleichzeitige Aufnehmen von mehreren Bildern während einer freien Bewegung der Uhrenkomponente gemäß einer Bewegungsgeschwindigkeit, die eine Komponente ungleich null entlang der Längsrichtung des Messkanals (6) einer Messzelle (4) aufweist, umfasst, wobei die Geschwindigkeit zwischen 70 und 180 mm/s einschließlich beträgt.

19. Verfahren zum Messen einer Uhrenkomponente nach Anspruch 17 oder 18, **dadurch gekennzeichnet, dass** es alle oder einen Teil der folgenden zusätzlichen Schritte umfasst:
- Vergleichen mindestens eines von dem Rechner der Steuerungseinheit berechneten Maßes der Uhrenkomponente mit mindestens einem Referenzmaß, um zu ermitteln, ob die Uhrenkomponente konform ist oder nicht;
- Transport der Uhrenkomponente zu einem dedizierten Lagerbereich;
- im Fall einer nicht konformen Uhrenkomponente, Berechnen mindestens eines Bearbeitungskorrekturdatenelements in Abhängigkeit von dem mindestens einen berechneten Maß der Uhrenkomponente und Übertragen des mindestens einen Korrekturdatenelements zu einer Bearbeitungseinheit und/oder Übertragen einer Warnung zu einer Bedienperson.

## Claims

1. A device (1) for measuring a horological component, comprising:
a. a measurement cell (4) comprising:
i. a measurement channel (6) extending in a longitudinal direction and filled with a liquid, capable of displacing a horological component;
ii. outer faces (7) that are flat and parallel pairwise,
b. at least two optical systems (20, 20') positioned in the same plane at right angles to the longitudinal direction of the measurement channel (6), these at least two optical systems (20, 20') being angularly offset relative to one another, and arranged opposite at least a part of the outer faces (7) of the measurement cell (4) at a measurement zone of the measurement cell (4), each optical system (20, 20') comprising:
iii. a light emitter (21, 21') suitable for emitting a collimated light in a predefined wavelength or a defined polarization in the direction of the measurement channel (6) through an outer face (7) of the measurement cell (4), so as to be able to illuminate a horological component present and being displaced in the measurement channel (6) in the measurement zone, and
iv. an optical sensor (22, 22') associated with said light emitter (21, 21') for receiving at least a part of the light emitted by said light emitter (21, 21'),
said at least two optical systems (20, 20') comprising light emitters (21, 21') operating in different respective wavelengths or polarizations,
c. a driver unit (50), capable of driving the optical systems (20, 20') and of processing the digital data obtained from the optical systems, configured to implement calculations of at least one dimension of a horological component.

2. The device for measuring a horological component as claimed in the preceding claim, **characterized in that** the measurement cell (4) is made of a material that is transparent to the wavelengths of said at least two optical systems (20, 20'), **in that** it has a polygonal outer section which forms said outer faces (7), these outer faces (7) having a surface area greater than or equal to the surface area of the field of view of an optical system (20, 20') arranged opposite, and **in that** it has a round internal section delimiting the measurement channel (6), with no sharp edges, notably circular or ellipsoid.

3. The device for measuring a horological component as claimed in one of the preceding claims, **characterized in that** it comprises at least two optical systems (20, 20'), the respective light emitters (21, 21') of which operate at a respective wavelength lying between 435 and 500 nm and between 495 and 570 nm.

4. The device for measuring a horological component as claimed in one of the preceding claims, **characterized in that** said measurement channel (6) of the measurement cell (4) is arranged to allow the free displacement of the horological component, in a static liquid by gravitation or by entrainment by the liquid in laminar flow and/or by gravitation, particularly at a controlled constant speed in the measurement channel (6) at the level of the measurement zone.

5. The device for measuring a horological component as claimed in the preceding claim, **characterized in that** it is arranged for the displacement of a horological component at a speed lying between 70 and 180 mm/s inclusive, and comprising at least one component of non-zero displacement in the longitudinal direction of the measurement channel (6).

6. The device for measuring a horological component as claimed in one of the preceding claims, **characterized in that** said liquid of the measurement channel (6) is a liquid of kinetic viscosity lying between 2 and 50 mm²/s, notably a cutting oil, a mineral oil, a vegetable oil, an emulsion, a microemulsion, or a synthetic fluid.

7. The device for measuring a horological component as claimed in one of the preceding claims, **characterized in that** the refractive indices of the liquid and of the material of the measurement cell are substantially identical.

8. The device for measuring a horological component as claimed in one of the preceding claims, **characterized in that** it further comprises complementary lighting devices (23, 24, 25) arranged alongside optical sensors (22, 22') of the at least two optical systems (20, 20') to enhance the perception of said at least two optical systems (20, 20').

9. The device for measuring a horological component as claimed in one of the preceding claims, **characterized in that** the driver unit is configured to drive the at least two optical systems (20, 20') so as to synchronize the at least two optical systems (20, 20') for them to each take at least one simultaneous image of one and the same horological component.

10. The device for measuring a horological component as claimed in one of the preceding claims, **characterized in that** the driver unit comprises a computer configured to implement calculations of at least one dimension of a horological component by a computer program, to assess its conformity or non-conformity with respect to reference data.

11. The device for measuring a horological component as claimed in the preceding claim, **characterized in that** said computer is configured to perform the calculation of a length of a horological component, of a dimension transversal to this length, which corresponds substantially to the diameter of a horological component when the latter has a symmetry of revolution, and of an angle between the direction of this length and the longitudinal direction of the measurement channel (6).

12. The device for measuring a horological component as claimed in one of the preceding claims, **characterized in that** it comprises a detection sensor (26) capable of detecting the presence, and optionally the speed of a horological component being displaced in the measurement channel (6) of the measurement cell (4).

13. The device for measuring a horological component as claimed in the preceding claim, **characterized in that** the detection sensor (26) operates on the basis of a wavelength that is different from that of the at least two optical systems (20, 20').

14. The device for measuring a horological component as claimed in one of the preceding claims, **characterized in that** it comprises an arrangement allowing a horological component to be transferred to the input and oriented toward the measurement channel (6) of the measurement cell (4), capable of transferring a horological component, directly without cleaning, from the output of a machining machine to said measurement channel (6), and/or **in that** it comprises an arrangement allowing a horological component to be transferred at the output of the measurement channel (6) and oriented toward a cleaning, storage and/or rejection unit, depending on the conformity of the calculated dimension or dimensions.

15. The device for measuring a horological component as claimed in one of the preceding claims, **characterized in that** it is capable of measuring a horological component of revolution, with a cylindrical symmetry, such as a balance staff and/or a horological component that is not cylindrical or not symmetrical, such as the square or the hook of a barrel arbor.

16. A device for manufacturing a horological component, **characterized in that** it comprises a machining unit and a measurement device (1) as claimed in one of the preceding claims, and **in that** it comprises an introduction part (2) allowing a horological component to be transferred from the output of the machining unit to a measurement cell (4) of the measurement device (1) without intermediate cleaning, and, optionally, a communication device configured for an automatic transmission of a command to correct the machining device by the measurement device (1) as a function of at least one dimension calculated by the measurement device (1) of a horological component obtained from the machining device.

17. A method for measuring a horological component, **characterized in that** it comprises the following steps:
- setting in motion of a horological component in a liquid in a measurement channel (6) of a measurement cell (4);
- optionally, detection of the horological component by a detection sensor (26) and transmission of the detection data to a driver unit;
- driving of at least two optical systems (20, 20') positioned in the same plane at right angles to the longitudinal direction of the measurement channel (6), these at least two optical systems (20, 20') being angularly offset relative to one another, by a driver unit for simultaneous images to be taken at the moment of passage of the horological component in a measurement zone of a measurement cell (4);
- transmission of digital data representative of the images obtained by the at least two optical systems (20, 20') to a driver unit;
- calculation of at least one dimension of the horological component by a computer of the driver unit from said digital data.

18. The method for measuring a horological component as claimed in the preceding claim, **characterized in that** it comprises the simultaneous taking of several images during a free displacement of the horological component, according to a speed of displacement that has a non-zero component in the longitudinal direction of the measurement channel (6) of a measurement cell (4), said speed lying between 70 and 180 mm/s inclusive.

19. The method for measuring a horological component as claimed in claim 17 or 18, **characterized in that** it comprises all or part of the following additional steps:
- comparison of at least one dimension of the horological component calculated by said computer of the driver unit with at least one reference dimension to determine whether the horological component is in conformity or not;
- transfer of said horological component to a dedicated storage zone;
- in the case of a nonconforming horological component, calculation of at least one machining correction datum as a function of the at least one calculated dimension of the horological component, and transmission of the at least one correction datum to a machining unit, and/or transmission of an alert to an operator.
